# EUROPÄISCHE PATENTANMELDUNG

(11) **EP 2 298 961 A1**
(43) Veröffentlichungstag der Anmeldung: **23.03.2011**
(21) Anmeldenummer: 10180997.8
(22) Anmeldetag: 05.10.2005
(51) Int. Cl.: C23C 22/60, C23C 22/66, C23C 22/63, C23C 22/34, C23C 22/00, C23C 22/06, C23C 22/73, C23C 22/74, C23C 22/83, B05D 7/00, B05D 7/14, B23K 35/36, C09D 5/08, C09D 5/12, F28F 19/02

(54) **Beschichtungsverfahren von metallischen Werkstücken**

(30) Priorität: 07.10.2004 DE 102004049107
(62) Teilanmeldung aus: 05794799.6
(71) Anmelder: Behr GmbH & Co. KG, 70469 Stuttgart (DE)
(72) Erfinder: Trautwein, Ingo, 74321, Bietigheim-Bissingen (DE); Englert, Peter, 74177, Bad Friedrichshall (DE); Pfitzer, Matthias, 73779, Deizisau (DE); Boger, Snjezana, 73734, Esslingen (DE); Holzmann, Frank, 90562 Heroldsweg (DE)
(74) Vertreter: Grauel, Andreas

(57) **Zusammenfassung**

Die vorliegende Erfindung betrifft ein Verfahren zur Beschichtung erhitzter Werkstücke.

## Beschreibung

Die vorliegende Erfindung betrifft ein Verfahren zur Beschichtung von Werkstücken aus Metall und/oder einer oder mehreren Legierungen, ein mittels dieses Verfahrens hergestelltes Werkstück sowie eine Vorrichtung zur Beschichtung von Werkstücken.

Die direkte Beschichtung von Aluminium oder Aluminiumlegierungen mittels organischer Beschichtungssysteme ist aufgrund der geringen Haftfähigkeit der organischen Beschichtungssysteme auf dem Aluminium nahezu unmöglich. Zur Verbesserung der Haftvermittlung zwischen Ausgangswerkstoff und organischen Beschichtungssystemen ist es daher bekannt, Aluminium oder Aluminiumlegierungen einer sogenannten Böhmit-Behandlung zu unterziehen, wobei heißes Wasser oder heißer Dampf, gegebenenfalls zusammen mit Ammoniak oder Aminen, mit dem Werkstück in Verbindung gebracht wird, so dass eine Aluminiumoxid- bzw. Böhmit-Schicht gebildet beziehungsweise verstärkt wird. Diese ermöglicht dann das Aufbringen einer organischen Beschichtung.

Die EP 1 142 663 A1 beschreibt Böhmitverfahren, im Rahmen derer deionisiertes Wasser bei Temperaturen von etwa 100°C oder Dampf bei

Temperaturen von 150°C eingesetzt wird, um Aluminiumteile oberflächlich zu modifizieren.

Aus der US 3,945,899 geht eine Böhmit-Behandlung von Aluminiumteilen mit Wasser einer Temperatur von 65 bis 100°C beziehungsweise Dampf mit Temperaturen von 100 bis 180°C hervor, wobei der Zusatz von Aminen und Ammoniak eine nochmalige Verstärkung der Aluminiumoxidschicht bewirkt. Aus dieser Schrift ist es auch bekannt, Aluminium oder dessen Legierungen einer chemischen Oberflächenbehandlung unter Einsatz von wässrigen Lösungen von Chromaten oder Phosphaten zu unterziehen, um auf diese Weise einerseits die Haftfähigkeit zu erhöhen und andererseits die Korrosionsanfälligkeit zu reduzieren. Diese sogenannte Konversionsbehandlung ist auch aus Stolzenfels (Industrie-Lackierbetrieb, Nr. 3, Seite 93-98, Curt R. Vincentz Verlag) bekannt, welche Chromatierungen von Aluminium-Werkstücken bei Temperaturen von 20 bis 50°C beschreibt. Riese-Meyer et al. (Aluminium 1991, Nr. 12, Seite 1215-1221) beschreibt chemische Konversionsbehandlungen mittels schichtbildender Phosphatierungen und Chromatierungen, wodurch die Lackhaftung und der Korrosionsschutz von Aluminium-Werkstücken verbessert werden können. Auch gemäß dieser Druckschrift wird die Chromatierung bei einer Temperatur von 20 bis 30°C beziehungsweise 30 bis 40°C durchgeführt.

Die vorgenannten Verfahren erweisen sich jedoch unter anderem aufgrund energetischer Überlegungen als nachteilig. Da die gemäß dem Stand der Technik zu modifizierenden Werkstücke in der Regel Raumtemperatur aufweisen, das heißt gegenüber einem vorhergehenden Löt- oder Fügeprozess in abgekühltem Zustand eingesetzt werden, ergibt sich ein erhöhter Handhabungs- und Zeitbedarf bei der Oberflächenmodifizierung solcher Werkstücke.

Der vorliegenden Erfindung liegt insbesondere das technische Problem zugrunde, ein die vorgenannten Nachteile überwindendes Verfahren bereitzustellen, insbesondere ein Verfahren bereitzustellen, das hydrophile Deckschichten und/oder Deckschichten mit verbesserter Haftung und/oder verringertem Geruch auf Werkstückoberflächen ermöglicht.

Ein Verfahren gemäß der vorliegenden Erfindung dient zur Beschichtung von Werkstücken aus Metall und/oder einer oder mehreren Legierungen, wobei die Werkstücke bevorzugt aus Aluminium, Kupfer und/oder Magnesium beziehungsweise einer Legierung eines der genannten Metalle bestehen. Das Verfahren umfasst ein Bereitstellen eines Werkstücks, ein Aufbringen eines Beschichtungsrohmaterials auf eine Oberfläche des Werkstücks, ein Erhitzen des Werkstücks und ein Abkühlen des Werkstücks.

Im Zusammenhang mit der vorliegenden Erfindung wird unter einem Werkstück ein beliebig ausgebildeter Gegenstand verstanden, der beispielsweise als Formkörper, also Körper definierter Gestalt, aber auch als Granulat oder Pulver vorliegen kann. In bevorzugter Ausführungsform liegt das Werkstück als Wärmetauscher oder wesentlicher Bestandteil desselben vor.

Die Aufgabe der Erfindung wird bevorzugt dadurch gelöst, dass das Beschichtungsrohmaterial durch einen thermisch aktivierten Prozess in mindestens eine Deckschicht umgewandelt wird, welche besonders bevorzugt durchgängig ausgebildet ist. Durch einfaches Erhitzen eines geeignet ausgewählten Beschichtungsrohmaterials und/oder des Werkstücks wird unter Umständen eine Bildung einer Deckschicht mit gewünschten Eigenschaften auf einfache Weise ermöglicht.

Eine bevorzugte Dicke der Deckschicht liegt zwischen 30 nm und 10000 nm, insbesondere zwischen 200 nm und 1000 nm. Besonders bevorzugt ist die Dicke der Deckschicht zwischen 400 nm und 700 nm. Bei einer anderen Ausführungsform ist die Dicke der Deckschicht zwischen 1000 nm und 4000 nm, bevorzugt zwischen 2000 nm und 3000 nm. In einer weiteren vorteilhaften Ausführung liegt die Dicke zwischen 4500 nm und 8000 nm.

Das Werkstück wird bevorzugt vor dem Aufbringen des Beschichtungsrohmaterials erhitzt. Wenn das Beschichtungsrohmaterial auf das erhitzte Werkstück aufgebracht wird, kann die thermisch aktivierte Umwandlung sofort erfolgen und überschüssiges Beschichtungsrohmaterial unter Umständen wieder abgewaschen und/oder wiederverwendet werden. Bei einer Variante ist es auch möglich, das Werkstück erst nach dem Aufbringen des Beschichtungsrohmaterials zu erhitzen.

Gemäß einer vorteilhaften Ausführungsform ist die Deckschicht hydrophil ausgestaltet, so dass beispielsweise auf der Oberfläche des Werkstücks kondensiertes Wasser besser von der Oberfläche abläuft. Insbesondere bei einem Einsatz des Werkstücks als oder in einem Wärmetauscher wird dadurch eine Beeinträchtigung der Funktion des Wärmetauschers verringert oder vermieden.

Gemäß einer Variante ist die Deckschicht geruchsarm ausgebildet. Vorteilhafterweise erreicht das Werkstück nach Anwendung des erfindungsgemäßen Verfahrens bei einem Geruchstest nach VDA 270 eine bessere Note als die Note 3 ("deutlich wahrnehmbar, aber noch nicht störend"). Besonders vorteilhaft ist die Wahl eines Beschichtungsrohmaterials zur Bildung einer Deckschicht, wodurch das Werkstück die Note 2 ("wahrnehmbar, nicht störend") oder besser erreicht.

Gemäß einer bevorzugten Ausgestaltung wird das Beschichtungsrohmaterial auf alle oder im wesentlichen alle Oberflächen des Werkstücks aufgebracht. Dies wird beispielsweise durch ein Eintauchen des Werkstücks in das Beschichtungsrohmaterial, ein Fluten des Werkstücks mit dem Beschichtungsrohmaterial oder ein Besprühen des Werkstücks mit dem Beschichtungsrohmaterial bewerkstelligt.

Bevorzugt wird das Werkstück auf mindestens 400°C, insbesondere auf mindestens 430°C erhitzt, da bei solchen Temperaturen eine Umwandlung des Beschichtungsrohmaterials durch thermische Aktivierung in kurzer Zeit erfolgt.

Gemäß bevorzugter Ausführungsformen der Erfindung erfolgt die Umwandlung des Beschichtungsrohmaterials zur Bildung einer Deckschicht als chemische Reaktion mit der Oberfläche des Werkstücks, als chemisch Umwandlung, insbesondere Polymerisation des Beschichtungsrohmaterials, als Sintern des Beschichtungsrohmaterials, als Konversion, insbesondere Keramisierung des Beschichtungsrohmaterials.

Gemäß vorteilhafter Ausgestaltungen enthält das Beschichtungsrohmaterial eine oder mehrere organische Verbindungen, bevorzugt insbesondere polyurethan- oder polyvinylalkoholbasierte Polymere, Monomere und/oder Oligomere. Insbesondere in diesem Fall wird die Oberfläche des Werkstücks auf 40-350°C erhitzt. Für eine effektive Umwandlung des Beschichtungsrohmaterials ist eine Erhitzung des Werkstücks auf 80-300°C unter Umständen vorteilhaft, wobei mit einer Erhitzung des Werkstücks auf 150-250°C besonders gute Ergebnisse erzielbar sind.

Vorteilhaft enthält das Beschichtungsrohmaterial Zusatzpartikel mit einem bevorzugten Durchmesser zwischen 1 und 100 nm, bei dem die Zusatzpartikel besondere Eigenschaften aufweisen. Ein Durchmesser zwischen 1000 und 10000 nm bei anderen Varianten ist unter Umständen ebenfalls vorteilhaft. Auch ein Durchmesser in dem Zwischenbereich zwischen 100 und 1000 nm ist bei einigen Ausführungsbeispielen von Vorteil.

Bei anderen Varianten enthalten die Zusatzpartikel TiO₂, SiO₂, ZrO₂, Al₂O₃ oder Kationen von Nebengruppen-Metallen, insbesondere Zr, Ti, V, Mn, oder von Hauptgruppen-Elementen, insbesondere Al, Si. Hierdurch werden unter Umständen gewünschte Eigenschaften der Deckschicht verstärkt.

Gemäß vorteilhafter Ausgestaltungen enthält das Beschichtungsrohmaterial eine oder mehrere anorganische Verbindungen, bevorzugt metallische und/oder nichtmetallische Salze, insbesondere NaSiO₃, KSiO₃, NH₄OH, KOH, NaOH, und/oder Wasser, insbesondere vollentsalztes oder destilliertes Wasser. Insbesondere in diesem Fall wird die Oberfläche des Werkstücks auf 80-900°C erhitzt. Für eine effektive Umwandlung des Beschichtungsrohmaterials ist eine Erhitzung des Werkstücks auf 200-700°C unter Umständen vorteilhaft, wobei mit einer Erhitzung des Werkstücks auf 350-550°C besonders gute Ergebnisse erzielbar sind. Insbesondere für die Herstellung einer durchgängigen Schicht vorteilhaft ist bei einer Ausführungsform das Erhitzen des Werkstücks auf eine Temperatur zwischen 400°C und 500°C.

Gemäß einer bevorzugten Ausführungsform hemmt oder verhindert zumindest eine Deckschicht eine Keimbildung auf der Oberfläche des Werkstücks. Dadurch wird unter Umständen ein ungewünschter Geruch vermieden.

Gemäß einer vorteilhaften Ausgestaltung beträgt die Temperatur des Beschichtungsrohmaterials während des Aufbringens auf die Oberfläche des Werkstücks mindestens -200°C, insbesondere mindestens 0°C, und höchstens 100°C, insbesondere höchstens 80°C, aufweist. Bei einer Ausführungsform hat sich eine Temperatur zwischen 90°C und 100°C für das Beschichtungsrohmaterial erwiesen. Besonders einfach ist das Verfahren, wenn keine Temperierung des Beschichtungsrohmaterials notwendig ist, das heißt wenn das Beschichtungsrohmaterial bei Raumtemperatur auf das Werkstück aufgebracht wird.

Gemäß einer Variante beträgt die Temperatur des Beschichtungsrohmaterials während des Aufbringens auf die Oberfläche des Werkstücks zwischen 80 und 550°C. Vorteilhaft ist dabei ein kleiner Temperaturunterschied zwischen dem Beschichtungsrohmaterial und der Oberfläche des Werkstücks, besonders vorteilhaft befinden sich das Beschichtungsrohmaterial und die Oberfläche des Werkstücks während des Aufbringens auf im wesentlichen gleicher Temperatur.

In einer bevorzugten Ausführungsform der vorliegenden Erfindung ist das Werkstück aus Aluminium, Magnesium, Kupfer oder einer oder mehreren Aluminium- und/oder Magnesium- und/oder Kupferlegierungen aufgebaut, das heißt besteht aus Aluminium oder einer oder mehreren Legierungen oder enthält Aluminium oder eine oder mehrere Aluminiumlegierungen im Wesentlichen, zum Beispiel in Anteilen zu mindestens 50, 60, 70, 80, 90, 95 und insbesondere 99 Gew.-%, bezogen auf das Gewicht des Werkstückes.

In einer bevorzugten Ausführungsform wird die Erhitzung des Werkstücks dadurch erreicht, dass das Werkstück in noch heißer Form direkt im Anschluss an seinen Herstellprozess, z.B. nach dem Austritt aus einer Lötzone, nach thermischen Fügeprozessen, oder nach Aufheizen in Kammeröfen unter Ausnutzung vorhandener Wärmekapazität des Werkstücks einem erfindungsgemäßen Verfahren unterzogen wird.

Bei einer vorteilhaften Ausführungsform ist vorgesehen, dass das Werkstück, das aufgrund eines vorhergehenden CAB-Lötverfahrens bereits eine CAB-Flussmittelschicht aufweist, mittels der erfindungsgemäßen Vorgehensweise dergestalt behandelt wird, dass die vorhandene CAB-Flussmittelschicht chemisch-physikalisch modifiziert wird. Die erfindungsgemäße Vorgehensweise kann in einer Dotierung der vorhandenen Flussmittelschicht, zum Beispiel mit Metallen der Hauptgruppen I, II, III oder IV oder der Nebengruppen, insbesondere IV bis VI oder/und einer Erhöhung des Sauerstoff-Anteils resultieren. Die erfindungsgemäße Behandlung resultiert dann unter Umständen in einer verbesserten Korrosionsbeständigkeit.

Die erfindungsgemäß bevorzugt vorgesehene Behandlung von Flussmittel (CAB)-beschichteten Werkstücken führt unter Umständen zu einem vorteilhaften schuppigen, geschlossenen und abgerundeten Erscheinungsbild der Flussmittelschicht des Werkstücks, das sich von dem offenporigen, kantigen und plättchenartigen Erscheinungsbild unbehandelter Flussmittelbeschichteter Werkstücke unterscheidet.

Nach der Beschichtung kann das Werkstück in üblicher Weise weiterbehandelt, insbesondere gespült und getrocknet werden. Es kann selbstverständlich auch eine weitere Beschichtung, zum Beispiel mittels organischer Beschichtungssysteme erfolgen. Das vorliegende Verfahren stellt also unter Umständen einen Ausschnitt aus dem Herstellprozess eines Werkstückes, zum Beispiel eines Wärmetauschers, dar. Die erfindungsgemäß vorgesehene Herstellweise führt im Rahmen dieses Herstellverfahrens zu einer Verringerung der Herstellkosten für Werkstücke, zur Einsparung von Energie und Ressourcen, insbesondere durch Nutzung vorhandener Wärmekapazitäten der Werkstücke und zum reduzierten Einsatz beziehungsweise zur Vermeidung des Einsatzes von aggressiven Chemikalien zur Oberflächenbehandlung.

Als Beschichtungsrohmaterial kommen unter Umständen alle bekannten chemischen Elemente, Verbindungen, Gemische oder sonstige Zusammensetzungen in Frage. Ein vorzugsweise eingesetztes Beschichtungsrohmaterial ist eine oder mehrere Verbindungen, insbesondere ein oder mehrere Metallsalze eines oder mehrerer Elemente der Nebengruppen des PSE, insbesondere der Nebengruppen IV bis VI des PSE (Periodensystem der Elemente), zum Beispiel Titan, Hafnium, Vanadium, Tantal, Molybdän, Wolfram und insbesondere Zirkonium.

In einer weiteren Ausführungsform der vorliegenden Erfindung kann das Beschichtungsrohmaterial eine oder mehrere Verbindungen, insbesondere ein oder mehrere Metallsalze eines oder mehrerer Elemente der Hauptgruppen I, II, III und/oder IV des Periodensystems der Elemente sein, zum Beispiel ein Metallsalz von Beryllium, Barium, insbesondere von Magnesium oder Calzium oder Natrium oder Kalium.

In einer weiteren Ausführungsform der vorliegenden Erfindung kann das Beschichtungsrohmaterial eine oder mehrere Verbindungen eines oder mehrerer Elemente der Hauptgruppen V, VI, VII und/oder VIII des Periodensystems der Elemente sein.

In bevorzugter Ausführungsform der Erfindung können die vorgenannten Metalle in Salzform mit Anionen ausgewählt aus der Gruppe bestehend aus Chloriden, Carbonaten, insbesondere Hydrogencarbonaten, Nitraten, Sulfaten, Peroxiden und Phosphaten vorliegen. Insbescandere die Metallsalze der Elemente der Hauptgruppe I und II, zum Beispiel Kalium, Natrium und Kalzium, können als Lauge, also KOH, NaOH oder Ca(OH)₂, oder als Borat, Aluminat, Silikat oder Halogenid, insbesondere Fluorid, vorliegen.

In einer weiteren bevorzugten Ausführungsform der Erfindung ist das mindestens eine Beschichtungsrohmaterial ein CAB-Flussmittel ("controlled atmosphere brazing") der allgemeinen Formel KₓAl F_{y} mit x gleich 1 bis 3 und y = 4 bis 6, zum Beispiel Kaliumaluminiumhexafluorid und/oder CsₓAlF_{y}.

In einer weiteren bevorzugten Ausführungsform wird als Beschichtungsrohmaterial ein Ammoniumsalz, wie beispielsweise Ammoniumfluorid oder Ammoniumcarbonat, Kaliumfluorid, Natrium- oder Kaliumsilikat, Natrium- oder Kaliumborat, Natrium- oder Kaliumaluminat, vernetzbare, insbesondere metallorganische, wie beispielsweise zirkon- oder titanorganische, oder siliziumorganische Verbindungen oder auch Wasserstoffperoxid eingesetzt.

In besonders bevorzugter Ausführungsform werden zur Behandlung des Werkstückes das CAB-Flussmittel, Ammoniumsalz und/oder Kaliumfluorid in alkalischer Phase insbesondere in Form wässriger bevorzugt alkalischer Lösungen oder alkalischer Dämpfe oder Aerosole eingesetzt.

Die Metallverbindungen eines der Elemente der Nebengruppen, insbesondere Nebengruppen IV bis VI, beziehungsweise der Hauptgruppe I, II, III oder IV können in organischer und/oder anorganischer Phase, vorzugsweise in wässriger Phase vorliegen, insbesondere in flüssiger oder gasförmiger Phase, vorzugsweise in Aerosolform oder als Dampf. Das zur Lösung eingesetzte Wasser ist vorzugsweise vollentsalztes Wasser.

In einer weiteren bevorzugten Ausführungsform ist vorgesehen, als Beschichtungsrohmaterial zur Behandlung der Oberfläche des Werkstücks Wasser, vorzugsweise vollentsalztes und destilliertes Wasser einzusetzen, das zur Bildung der Deckschicht beispielsweise mit der Oberfläche des Werkstücks chemisch reagiert. Selbstverständlich ist es erfindungsgemäß auch möglich, als oberflächenmodifizierendes Mittel wässrige Lösungen von Ammoniak, von Aminen, insbesondere primären, sekundären oder tertiären Aminen, zum Beispiel Mono-, Di- oder Triethanolamine, Dimethylethanolamine, organischen Säuren oder Salzen von Ammoniak, Aminen, halogenierten organischen Verbindungen und/oder organischen Säuren einzusetzen. Selbstverständlich können auch Gemische der vorgenannten modifizierenden Mittel eingesetzt werden.

Bevorzugt kommt eine Lösung von 0,1 - 1 % KOH und/oder 0,1 - 1 % NH₄OH und/oder 0,1 - 1 % KₓAlF_{y} (x = 1 bis 3, y = 4 bis 6) und/oder 0,1 - 1 % Ca (NO₃)₂ und/oder 0,1 - 1 % Salze der Elemente der Nebengruppen IV bis VI des PSE in vollentsalztem Wasser zum Einsatz.

In einer besonders bevorzugten Ausführungsform der vorliegenden Erfindung wird als Ausgangswerkstück für das erfindungsgemäße Verfahren ein aus einem CAB-Lötverfahren resultierendes CAB-flussmittel beschichtetes Werkstück verwendet, welches mit einem oder mehreren der eingesetzten Beschichtungsrohmaterialien unter den angegebenen Bedingungen behandelt wird. Dabei kann insbesondere bei Behandlung der Oberfläche mit Wasser oder wässrigen Lösungen eine Deckschicht mit einem erhöhten Sauerstoffanteil erhalten werden, wobei diese je nach Art des eingesetzten modifizierenden Mittels auch dotiert sein kann, zum Beispiel mit einem oder mehreren der Metalle der Hauptgruppe I, II, III oder IV oder der Nebengruppen, insbesondere der Nebengruppen IV bis VI, oder sonstiger Beschichtungsrohmaterialien.

Die Erfindung sieht in einer anderen bevorzugten Ausführungsform vor, dass das Metallsalz, das CAB-Flussmittel, Ammoniumsalz und/oder Kaliumfluorid oder ein anderer Bestandteil des Beschichtungsrohmaterials in einer Matrix, zum Beispiel einer Matrix aus organischen und/oder anorganischen Lösemitteln oder Mischungen davon zur Behandlung der Oberfläche des Werkstückes eingesetzt wird. Die Matrix enthält dabei metallorganische, insbesondere siliziumorganische Verbindungen. Insbesondere enthält die Matrix organische und/oder anorganische Polymere, oder auch ein Gemisch der genannten Stoffe.

In einer besonders bevorzugten Ausführungsform ist vorgesehen, das Metallsalz, das CAB-Flussmittel, Ammoniumfluorid und/oder Kaliumfluorid oder ein anderer Bestandteil des Beschichtungsrohmaterials bei der Behandlung in einer Konzentration von 10 ppm bis 100000 ppm, bevorzugt von 50 ppm bis 10 000 ppm, einzusetzen.

Das mindestens eine Beschichtungsrohmaterial wird mit dem Werkstück vorzugsweise in Kontakt gebracht, indem das Werkstück in das mindestens eine Beschichtungsrohmaterial eingetaucht und imprägniert wird, oder indem es mit dem mindestens einen Beschichtungsrohmaterial gespült oder geflutet und dabei imprägniert wird, oder indem das mindestens eine Beschichtungsrohmaterial auf das Werkstück gesprüht wird, insbesondere mittels sogenannter Airless- oder Ultraschall-Zerstäubung oder in sonstiger Form in Kontakt gebracht wird.

In einer besonderen Ausführungsform kann vorgesehen sein, das Beschichtungsrohmaterial unter gegenüber Atmosphärendruck erhöhtem Druck auf das Werkstück einwirken zu lassen. Bei einer Besprühung kann neben Druckluft auch ein anderes Gas zum Einsatz kommen, zum Beispiel Sauerstoff, Stickstoff, Fluor, Ozon oder Dampf.

Als Metallsalze finden beispielsweise wässrige Lösungen von Ca(NO₃)₂ oder Zr(NO₃)₄ Verwendung, insbesondere mit Konzentrationen zwischen 0,1% und 5%, wobei deren pH-Wert bevorzugt zwischen 5,5 und 7,5 bis 8. Die Anwendungstemperatur liegt dabei vorteilhafterweise zwischen 40°C und 60°C. Auch ist es unter Umständen von Vorteil, 0,005% bis 5% Tetraethylammoniumtetrafluoroborat zuzufügen. Insbesondere wird mit einer solchen Lösung ein gelöteter, vorzugsweise CAB-gelöteter Wärmeübertrager behandelt.

Gemäß einer vorteilhaften Ausführungsform weist die Deckschicht ein Biozid auf. Beispielsweise bei einem Wärmeübertrager in einer Heizung- und/oder Klimaanlage ist eine hierdurch resultierende Keimhemmung erwünscht. In einer bevorzugten Ausführungsform enthält zu diesem Zweck ein Beschichtungsrohmaterial 0,005% - 5%, insbesondere 0,01% - 1%, besonders bevorzugt 0,05% - 0,5% Natrium- und/oder Kaliumsilikat, beispielsweise in insbesondere vollentsalztem Wasser, Vorteilhaft ist auch ein Beschichtungsrohmaterial mit Silber-Partikeln, insbesondere in einer der oben angegebenen Konzentrationen, wobei die Kombination eines Silikats mit Silber-Partikeln der Deckschicht unter Umständen besonders keimhemmende Eigenschaften verleiht. Die Silberpartikel haben dabei bevorzugterweise einen Durchmesser von 1-100 nm. Als Varianten sind auch Silberpartikel mit einem Durchmesser von 100-500 nm oder von 500-1000 nm vorteilhaft

Die Erfindung betrifft selbstverständlich auch mittels der vorgenannten Verfahren hergestellte Werkstücke, insbesondere beschichtete Wärmetauscher aus Aluminium oder Aluminiumlegierungen. Besonders bevorzugt ist der Wärmetauscher ein Verdampfer, insbesondere einer Kraftfahrzeugklimaanlage.

In vorteilhafter Weiterbildung der Erfindung wird das Werkstück in einem weiteren Schritt mit einem oder mehreren organischen oder anorganischen Beschichtungssystemen versehen, weiche besonders vorteilhaft zusätzliche keimhemmende und/oder hydrophile oder hydrophobe Eigenschaften aufweisen. Ein Aufbringen solcher lackähnlichen Schichten ist sowohl ohne als auch mit einem dazwischenliegenden Trocknungsschritt möglich.

Die Aufgabe der Erfindung wird auch durch eine Vorrichtung zur Beschichtung von Werkstücken mit einer Temperierkammer und einer in oder an der Temperierkammer angeordneten Einrichtung zum Aufbringen eines Beschichtungsrohmaterials auf die Werkstücke gelöst.

Bevorzugt ist die Einrichtung zum Aufbringen eines Beschichtungsrohmaterials als Sprühdüse ausgebildet, die zur Durchführung des erfindungsgemäßen Verfahrens besonders bevorzugt selbst temperierbar ist. Genauso gut ist eine Temperierung des Beschichtungsrohmaterials in einer Zuleitung der Einrichtung möglich.

Vorteilhaft ist, dass das Beschichtungrohmaterial eine oder mehrere anorganische Verbindungen, bevorzugt metallische und/oder nichtmetallische Salze, insbesondere NaSiO₃, KSiO₃, NH₄OH, KOH, NaOH, und/oder Wasser, insbesondere vollentsalztes oder destilliertes Wasser enthält, wobei die Oberfläche des Werkstücks bevorzugt auf 80-900°C, besonders bevorzugt auf 200-700°C, insbesondere auf 350-550°C, vorteilhaft auf 400-500°C erhitzt wird.

Vorteilhaft ist, dass zumindest eine Deckschicht eine Keimbildung auf der Oberfläche des Werkstücks hemmt oder verhindert.

Vorteilhaft ist, dass zumindest eine Deckschicht eine Tropfenbildung insbesondere von Kondenswasser auf der Oberfläche des Werkstücks hemmt oder verhindert, insbesondere der Oberfläche des Werkstücks hydrophile Eigenschaften verleiht.

Vorteilhaft ist, dass das Beschichtungsrohmaterial während des Aufbringens auf die Oberfläche des Werkstücks eine Temperatur von mindestens - 200°C, insbesondere mindestens 0°C, und höchstens 100°C, insbesondere höchstens 80°C, aufweist.

Vorteilhaft ist, dass das Beschichtungsrohmaterial während des Aufbringens auf die Oberfläche des Werkstücks eine Temperatur von 80 bis 550°C, bevorzugt von 80 bis 200°C, besonders bevorzugt von 90 bis 100°C aufweist.

Vorteilhaft ist, dass das Beschichtungsrohmaterial ein Salz, insbesondere ein Metallsalz insbesondere eines Elementes einer der Nebengruppen, insbesondere der Nebengruppen IV bis VI des PSE (Periodensystem der Elemente) aufweist.

Vorteilhaft ist, dass das Beschichtungsrohmaterial ein Metallsalz eines Elementes der Hauptgruppe I, II, III oder IV des PSE aufweist.

Vorteilhaft ist, dass das Beschichtungsrohmaterial eine Verbindung eines Elementes der Hauptgruppe V, VI, VII oder VIII des PSE aufweist.

Vorteilhaft ist, dass das Beschichtungsrohmaterial ein CAB-Flussmittel aufweist, insbesondere Kaliumaluminiumhexafluorid.

Vorteilhaft ist, dass das Beschichtungsrohmaterial ein Ammoniumsalz, insbesondere Ammoniumfluorid, Kaliumfluorid, Natrium- oder Kaliumsilikat, Natrium- oder Kaliumborat, Natrium- oder Kaliumaluminat und/oder zumindest eine vernetzbare Verbindung, wie beispielsweise eine metallorganische, insbesondere zirkon- oder titanorganische Verbindung und/oder zumindest eine siliziumorganische Verbindung oder dergleichen aufweist.

Vorteilhaft ist, dass das Metallsalz in einer wässrigen Phase vorliegt, wobei deren pH-Wert insbesondere zwischen 1 und 14, insbesondere zwischen 3 und 10, insbesondere zwischen 4 und 8 liegt.

Vorteilhaft ist, dass das CAB-Flussmittel, das Ammoniumsalz oder das Kaliumfluorid in einer Phase mit alkalischem pH-Wert vorliegt.

Vorteilhaft ist, dass das Beschichtungsrohmaterial Wasser, insbesondere voll entsalztes und destilliertes Wasser, oder eine wässrige Lösung enthaltend Ammoniak, Amine, Gase oder organische Säuren oder deren Salze oder Mischungen davon aufweist.

Vorteilhaft ist, dass ein Salz, insbesondere ein Metallsalz, ein CAB-Flussmittel, Ammoniumfluorid, Kaliumfluorid, Natrium- oder Kaliumsilikat, Natrium- oder Kaliumborat und/oder Natrium- oder Kaliumaluminat und/oder zumindest eine vernetzbare Verbindung, wie beispielsweise eine metallorganische, insbesondere zirkon- oder titanorganische Verbindung und/oder zumindest eine siliziumorganische Verbindung oder dergleichen in einer Matrix zum Aufbringen auf die Oberfläche des Werkstücks eingesetzt wird/werden.

Vorteilhaft ist, dass die Matrix aus organischen oder anorganischen Lösemitteln oder Mischungen davon aufgebaut ist.

Vorteilhaft ist, dass ein Salz, insbesondere ein Metallsalz, ein CAB-Flussmittel, Ammoniumfluorid, Kaliumfluorid, Natrium- oder Kaliumsilikat, Natrium- oder Kaliumborat und/oder Natrium- oder Kaliumaluminat und/oder metallorganische, insbesondere zirkon- oder titanorganische, oder siliziumorganische Verbindungen zum Aufbringen auf die Oberfläche des Werkstücks in einer Konzentration von 10 ppm bis 100000 ppm, insbesondere von 50 ppm bis 10000 ppm, eingesetzt wird/werden.

Vorteilhaft ist, dass das Beschichtungsrohmaterial ein Biozid und/oder einen Korrossionshemmer aufweist oder auf der Oberfläche des Werkstücks erzeugt.

Die Erfindung beschreibt ein Werkstück, hergestellt nach einem der vorhergehenden Verfahren.

Vorteilhaft ist, dass das Werkstück ein Wärmeübertrager, bevorzugt ein Verdampfer, oder ein Bestandteil eines Wärmeübertragers oder Verdampfers ist, insbesondere für Kraftfahrzeuge.

Die Aufgabe der Erfindung wird auch gelöst durch eine Vorrichtung zur Beschichtung von Werkstücken, insbesondere zur Durchführung eines Verfahrens, mit einer Temperierkammer und einer in oder an der Temperierkammer angeordneten Einrichtung zum Aufbringen eines Beschichtungsrohmaterials auf die Werkstücke.

Die Aufgabe der Erfindung wird auch gelöst durch eine Vorrichtung, bei der die Einrichtung zum Aufbringen eines Beschichtungsrohmaterials auf die Werkstücke als zumindest eine insbesondere temperierbare Sprühdüse ausgebildet ist.

Weitere vorteilhafte Ausgestaltungen der vorliegenden Erfindung ergeben sich aus den Unteransprüchen.

## Patentansprüche

1. Verfahren zur Beschichtung von Werkstücken aus Metall und/oder einer oder mehreren Legierungen, umfassend ein Bereitstellen eines Werkstücks, ein Aufbringen eines Beschichtungsrohmaterials auf eine Oberfläche des Werkstücks, ein Erhitzen des Werkstücks, ein thermisch aktiviertes Umwandeln des Beschichtungsrohmaterials zu mindestens einer insbesondere durchgängigen Deckschicht und ein Abkühlen des Werkstücks.

2. Verfahren nach Anspruch 1, **dadurch gekennzeichnet, daß** das Werkstück zumindest in einem oberflächennahen Bereich, insbesondere hauptsächlich, Aluminium, Kupfer und/oder Magnesium enthält.

3. Verfahren nach einem der vorhergehenden Ansprüche, **dadurch gekennzeichnet, daß** die Deckschicht durchgängig, hydrophil und/oder geruchsarm ist.

4. Verfahren nach einem der vorhergehenden Ansprüche, **dadurch gekennzeichnet, daß** das Beschichtungsrohmaterial auf alle oder im wesentlichen alle Oberflächen des Werkstücks aufgebracht wird.

5. Verfahren nach einem der vorhergehenden Ansprüche, **dadurch gekennzeichnet, daß** das Beschichtungsrohmaterial durch Auftragen, Streichen, Tauchen, Fluten und/oder Sprühen auf die Oberfläche des Werkstücks aufgebracht wird.

6. Verfahren nach einem der vorhergehenden Ansprüche, **dadurch gekennzeichnet, daß** das Werkstück auf mindestens 400°C, insbesondere auf mindestens 430°C erhitzt wird.

7. Verfahren nach einem der vorhergehenden Ansprüche, **dadurch gekennzeichnet, daß** das Beschichtungsrohmaterial zur Bildung einer Deckschicht mit der Oberfläche des Werkstücks chemisch reagiert.

8. Verfahren nach einem der vorhergehenden Ansprüche, **dadurch gekennzeichnet, daß** das Beschichtungsrohmaterial zur Bildung einer Deckschicht chemisch umgewandelt, insbesondere polymerisiert wird.

9. Verfahren nach einem der vorhergehenden Ansprüche, **dadurch gekennzeichnet, daß** das Beschichtungsrohmaterial zur Bildung einer Deckschicht gesintert wird.

10. Verfahren nach einem der vorhergehenden Ansprüche, **dadurch gekennzeichnet, daß** das Beschichtungsrohmaterial zur Bildung einer Deckschicht konvertiert, insbesondere keramisiert wird.

11. Verfahren nach einem der vorhergehenden Ansprüche, **dadurch gekennzeichnet, daß** das Werkstück nach dem Aufbringen des Beschichtungsrohmaterials erhitzt wird.

12. Verfahren nach einem der vorhergehenden Ansprüche, **dadurch gekennzeichnet, daß** das Beschichtungrohmaterial auf eine erhitzte Oberfläche aufgebracht wird.

13. Verfahren nach einem der vorhergehenden Ansprüche, **dadurch gekennzeichnet, daß** das Beschichtungsrohmaterial eine oder mehrere organische Verbindungen, bevorzugt insbesondere polyurethan- oder polyvinylalkoholbasierte Polymere, Monomere und/oder Oligomere enthält, wobei die Oberfläche des Werkstücks bevorzugt auf 40-350°C, besonders bevorzugt auf 80-300°C, insbesondere auf 150-250°C erhitzt wird.

14. Verfahren nach einem der vorhergehenden Ansprüche, **dadurch gekennzeichnet, daß** das Beschichtungsrohmaterial Zusatzpartikel enthält, deren Durchmesser insbesondere zwischen 1 und 100 nm, zwischen 100 und 1000 nm oder zwischen 1000 und 10000 nm liegt.

15. Verfahren nach einem der vorhergehenden Ansprüche, **dadurch gekennzeichnet, daß** das Beschichtungsrohmaterial Zusatzpartikel enthaltend TiO₂, SiO₂, ZrO₂, Al₂O₃ oder Kationen von Nebengruppen-Metallen, insbesondere Zr, Ti, V, Mn, oder von Hauptgruppen-Elementen, insbesondere Al, Si, aufweist.
